(19) Europäisches Patentamt / European Patent Office / Office européen des brevets

(11) **EP 3 244 547 B1**

(12) **FASCICULE DE BREVET EUROPEEN**

(45) Date de publication et mention de la délivrance du brevet:
**16.11.2022 Bulletin 2022/46**

(21) Numéro de dépôt: **17170564.3**

(22) Date de dépôt: **11.05.2017**

(51) Classification Internationale des Brevets (IPC):
**H04B 7/04** (2017.01)    **H04L 27/26** (2006.01)

(52) Classification Coopérative des Brevets (CPC):
**H04L 27/2654; H04B 7/0456; H04B 7/046; H04L 27/26416; H04L 27/2698**

(54) **ÉMETTEUR/ RÉCEPTEUR MIMO-FBMC À PRÉCODAGE LINÉAIRE IMPLÉMENTÉ DANS LE DOMAINE FRÉQUENTIEL**

MIMO-FBMC-SENDER/EMPFÄNGER MIT LINEARER VORKODIERUNG IM FREQUENZBEREICH

MIMO-FBMC TRANSMITTER/RECEIVER WITH LINEAR PRECODING IMPLEMENTED IN THE FREQUENCY DOMAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.05.2016 FR 1654298**

(43) Date de publication de la demande:
**15.11.2017 Bulletin 2017/46**

(73) Titulaire: **Commissariat à l'Energie Atomique et aux Energies Alternatives
75015 Paris (FR)**

(72) Inventeur: **CASSIAU, Nicolas
38960 SAINT ETIENNE DE CROSSEY (FR)**

(74) Mandataire: **Brevalex
56, Boulevard de l'Embouchure
B.P. 27519
31075 Toulouse Cedex 2 (FR)**

(56) Documents cités:
• ROTTENBERG FRANCOIS ET AL: "Optimal zero forcing precoder and decoder design for multi-user MIMO FBMC under strong channel selectivity", 2016 IEEE INTERNATIONAL CONFERENCE ON ACOUSTICS, SPEECH AND SIGNAL PROCESSING (ICASSP), IEEE, 20 mars 2016 (2016-03-20), pages 3541-3545, XP032901262, DOI: 10.1109/ICASSP.2016.7472336

• AMIR AMINJAVAHERI ET AL: "Frequency spreading equalization in multicarrier massive MIMO", 2015 IEEE INTERNATIONAL CONFERENCE ON COMMUNICATION WORKSHOP (ICCW), 5 avril 2015 (2015-04-05), pages 1292-1297, XP055349039, DOI: 10.1109/ICCW.2015.7247356 ISBN: 978-1-4673-6305-1

• MAURICE BELLANGER: "FS-FBMC: A flexible robust scheme for efficient multicarrier broadband wireless access", 2012 IEEE GLOBECOM WORKSHOPS (GC WKSHPS 2012) : ANAHEIM, CALIFORNIA, USA, 3 - 7 DECEMBER 2012, IEEE, PISCATAWAY, NJ, 3 décembre 2012 (2012-12-03), pages 192-196, XP032341368, DOI: 10.1109/GLOCOMW.2012.6477568 ISBN: 978-1-4673-4942-0

• CHRISLIN LELE ET AL: "The Alamouti Scheme with CDMA-OFDM/OQAM", EURASIP JOURNAL ON ADVANCES IN SIGNAL PROCESSING, HINDAWI PUBLISHING CORP, US, vol. 2010, 18 janvier 2010 (2010-01-18), pages 703513-1, XP002688650, ISSN: 1687-6172, DOI: 10.1155/2010/703513

# EP 3 244 547 B1

**Description**

## DOMAINE TECHNIQUE

La présente invention concerne de manière générale le domaine des systèmes de télécommunication utilisant une modulation multi-porteuse à banc de filtres, encore dénommés systèmes FBMC (Filter Bank Multi-Carrier). Il concerne également les systèmes MIMO (Multiple Input Multiple Output) utilisant un précodage à l'émission.

## ÉTAT DE LA TECHNIQUE ANTÉRIEURE

Les systèmes de télécommunication utilisant une modulation multi-porteuse sont bien connus dans l'état de la technique. Le principe d'une telle modulation consiste à diviser la bande de transmission en une pluralité de sous-canaux fréquentiels associés à des sous-porteuses et à moduler chacune de ces sous-porteuses par les données à transmettre.

La modulation multi-porteuse la plus répandue est sans aucun doute la modulation OFDM (Orthogonal Frequency Division Multiplexing). Toutefois, l'occupation spectrale d'un signal OFDM étant sensiblement plus importante que la bande de sous-porteuses qu'il utilise en raison de l'étalement des lobes secondaires, la modulation OFDM n'est pas une solution optimale pour des applications nécessitant de forts taux de réjection hors bande.

La modulation par banc de filtres ou FBMC (Filter Bank Multi Carrier) est une modulation multi-porteuse permettant d'obtenir une meilleure localisation spectrale dans la bande de sous-porteuses. Elle est en outre l'une des solutions possibles pour les systèmes de télécommunication de la cinquième génération.

Le principe de la modulation FBMC est basé sur une synthèse par banc de filtres à l'émission et une analyse par banc de filtres à la réception, le produit de la fonction de transfert d'un filtre à l'émission par la fonction de transfert du filtre correspondant à la réception étant égale à la fonction de transfert du filtre de Nyquist.

Les systèmes FBMC sont classiquement implémentés dans le domaine temporel. La structure d'un système FBMC implémenté dans le domaine temporel a été décrite en détail dans l'article de B. Hirosaki intitulé « An orthogonally multiplexed QAM system using the discrete Fourier transform » publié dans IEEE Trans on Comm., vol. 29 No. 7, pp. 982-989, Juillet 1981, ainsi que dans l'article de P. Siohan et al. intitulé « Analysis and design of OFDM/OQAM systems based on filterbank theory" publié dans IEEE Trans. on signal processing, vol. 50, No 5, pp. 1170-1183, Mai 2002. Les systèmes FBMC implémentés dans le domaine temporel font appel à des réseaux de filtres polyphasés d'où leur dénomination PPN-FBMC (Polyphase Network FBMC).

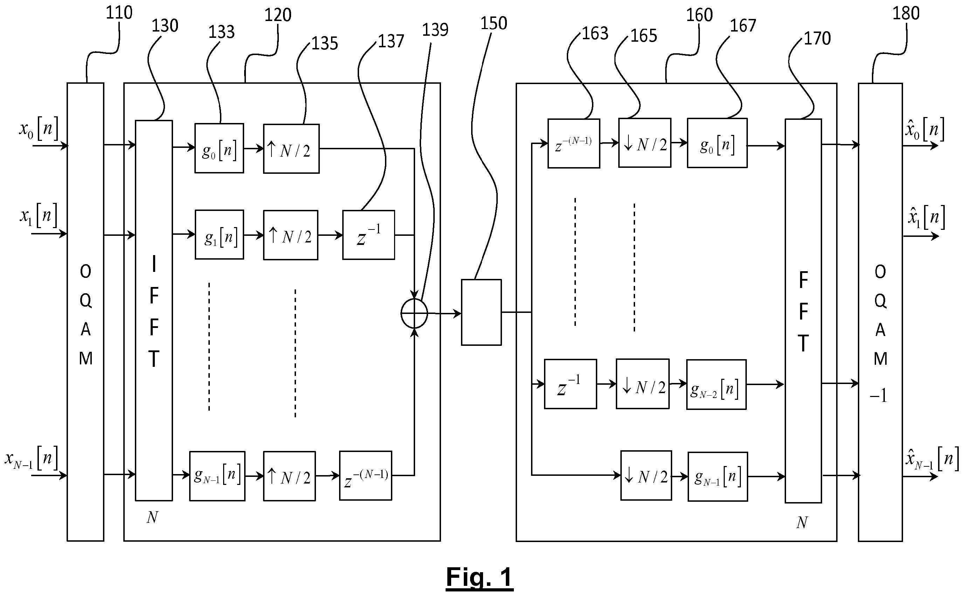

Le principe de la modulation FBMC est basé sur une synthèse par banc de filtres à l'émission et une analyse par banc de filtres à la réception comme expliqué en relation avec la Fig. 1.

La Fig. 1 représente de manière schématique la structure d'un premier système d'émission/réception FBMC connu de l'état de la technique.

Cette structure a été décrite en détail dans l'article de B. Hirosaki intitulé « An orthogonally multiplexed QAM system using the discrete Fourier transform » publié dans IEEE Trans on Comm., vol. 29 No. 7, pp. 982-989, Juillet 1981, ainsi que dans l'article de P. Siohan et al. intitulé « Analysis and design of OFDM/OQAM systems based on filterbank theory" publié dans IEEE Trans. on signal processing, vol. 50, No 5, pp. 1170-1183, Mai 2002.

Au niveau de l'émetteur, les symboles de modulation QAM à transmettre avec une cadence $Nf$ où $f = 1/T$, sont groupés par blocs de taille $N$, $x_0[n],...,x_{N-1}[n]$, où $n$ est l'indice temporel du bloc. Chaque bloc de N symboles est fourni en parallèle à N voies d'entrée d'un module de prétraitement 110, dit prétraitement OQAM (Offset QAM). Ce module de prétraitement a pour fonction de démultiplexer la partie réelle et la partie imaginaire des symboles d'entrée avec une fréquence $2f$ de sorte que deux échantillons transmis au même instant sur deux sous-canaux successifs ou deux échantillons transmis en deux instants successifs sur un même sous-canal sont l'un réel et l'autre purement imaginaire. Chacune des $N$ voies de sortie du module de prétraitement 110 correspond à un sous-canal.

Les échantillons ainsi obtenus sont fournis sous la forme de blocs de taille $N$ à un banc de filtres de synthèse 120, constitué d'un module IFFT (transformée de Fourier rapide inverse) de taille $N$, 130, d'une pluralité $N$ de filtres polyphasés 133, d'une pluralité de sur-échantillonneurs 135, de facteur $M = N / 2$, en sortie des différents filtres polyphasés, et enfin d'une pluralité de retards, 137, arrangés en parallèle et variant de 0 à $N-1$ périodes d'échantillonnage. Chacune des N voies de traitement correspond à un sous-canal.

Les sorties des filtres polyphasés, sur-échantillonnées et retardées sont sommées par l'additionneur 139 avant translation à une fréquence RF (non représentée) et transmission sur le canal 150.

Les filtres polyphasés sont des versions translatées en fréquence de $k / MT$ d'un filtre prototype dont la réponse impulsionnelle est de durée $KT$, autrement dit la sortie d'un filtre polyphasé recouvre temporellement la sortie du filtre polyphasé adjacent de $M$ échantillons. Il en résulte qu'une sortie de filtre polyphasé recouvre temporellement $K$ autres sorties de filtres polyphasés. Le coefficient est dénommé pour cette raison coefficient de recouvrement (*overlapping factor*) ou d'entrelacement (*interleaving factor*).

Du côté du récepteur, après démodulation en bande de base, le signal reçu est échantillonné avec une cadence $Nf$. Les échantillons sont fournis sous forme de blocs de taille $N$ à un banc de filtres d'analyse, 160, comprenant une pluralité de retards, 163, arrangés en parallèle et variant de 0 à $N$-1 périodes d'échantillonnage, dans l'ordre inverse des retards 137. Les flux d'échantillons issus des différents retards sont ensuite décimés d'un facteur $M = N / 2$ par les décimateurs 165 puis filtrés par les filtres d'analyse 167. Les filtres d'analyse ont une réponse impulsionnelle conjuguée et inversée temporellement par rapport au filtre de synthèse correspondant. Etant donné que le filtre prototype est à valeurs réelles, et symétrique par inversion temporelle, on peut montrer qu'un filtre d'analyse a la même réponse impulsionnelle que le filtre de synthèse correspondant. La combinaison d'un filtre de synthèse avec le filtre d'analyse correspondant (produit des fonctions de transfert) donne un filtre de Nyquist.

Les symboles en sortie des filtres de synthèse font ensuite l'objet d'une FFT (transformée de Fourier rapide) de taille $N$ en 170, les différentes composantes fréquentielles de la FFT étant ensuite fournies au module de post-traitement 180 effectuant un traitement inverse de celui du prétraitement 110.

Le système FBMC représenté en Fig. 1 est encore appelé dans la littérature PPN-FBMC (*PolyPhase Network* FBMC) en raison du banc de filtres polyphasés qu'il utilise.

Par ailleurs, on connait de l'état de la technique les systèmes de télécommunication à diversité spatiale de type MIMO (*Multiple Input Multiple Output*) mettant en œuvre une pluralité d'antennes au niveau de l'émetteur et une pluralité d'antennes au niveau du récepteur. Ces systèmes permettent d'obtenir des débits sensiblement plus élevés que les systèmes SISO (*Single Input Single Output*) classiques.

Les systèmes MIMO-OFDM permettent de conjuguer les avantages de la diversité spatiale et de la modulation OFDM, à savoir des débits élevés avec de faibles niveaux d'interférence inter-symbole (ISI). Lorsque les caractéristiques du canal ou CSI (*Channel State Information*) sont connues de l'émetteur, celui-ci peut effectuer un précodage linéaire pour transmettre une pluralité de flux sur des canaux virtuels en minimisant l'interférence entre flux ou MSI (*Multi-Stream Interference*). De manière générale, un précodage linéaire a pour objet de distribuer des flux de données, destinés à un ou plusieurs utilisateurs, sur une pluralité de modes spatiaux et d'allouer une puissance de transmission à chacun de ces modes. Le nombre de modes spatiaux doit être inférieur ou égal au rang de la matrice du canal composite considéré. On trouvera un exemple de technique de précodage pour système MIMO-OFDM dans l'article de E. Auger intitulé « Time domain precoding for MIMO-OFDM systems » publié dans Proc. of 10th International OFDM Workshop, Aug. 2005.

De manière similaire, la technologie FBMC a été appliquée aux systèmes de télécommunication de type MIMO, dénommés alors MIMO-FBMC. Toutefois, les systèmes MIMO-FBMC sont sensiblement plus complexes que les systèmes MIMO-OFDM du fait que la modulation FBMC utilise intrinsèquement l'orthogonalité dans le plan complexe pour éliminer l'interférence entre symboles. Il a été également envisagé de transmettre une pluralité de flux dans un système MIMO-FBMC en effectuant un précodage linéaire au niveau de l'émetteur. Une telle méthode de précodage a été décrite par exemple dans l'article de F. Horlin et al. intitulé « Interference-free SDMA for FBMC-OQAM » publié dans EURASIP Journal on Advances in Signal Processing 2013, No. 46, pages 1-13. Toutefois, un tel précodage est très complexe puisqu'il nécessite d'appliquer plusieurs matrices de précodage par sous-canal de sorte à non seulement garantir la séparation des flux mais encore à garantir l'absence d'interférences entre sous-canaux.

Le but de la présente invention est par conséquent de proposer un émetteur et/ou un récepteur de système MIMO-FBMC implémentant une méthode de précodage linéaire particulièrement simple, tout en garantissant la séparation des flux de données et l'absence d'interférences entre sous-canaux.

Le document ROTTENBERG FRANCOIS ET AL: "Optimal zero forcing precoder and decoder design for multi-user MIMO FBMC under strong channel selectivity",2016 IEEE INTERNATIONAL CONFERENCE ON ACOUSTICS, SPEECH AND SIGNAL PROCESSING (ICASSP), IEEE, 20 mars 2016, révèle un émetteur et récepteur MIMO FBMC (implémentation de type polyphase PPN) où le précodage s'applique aux symboles OQAM dans le domaine fréquentiel.

Le document AMIR AMINJAVAHERI ET AL: "Frequency spreading equalization in multicarrier massive MIMO",2015 IEEE INTERNATIONAL CONFERENCE ON COMMUNICATION WORKSHOP (ICCW), 5 avril 2015 est le seul document trouvé appliquant une structure fréquentielle pour le FBMC inspirée de Bellanger et son FS-FBMC pour l'appliquer à un récepteur de type Massive MIMO où l'égalisation spatiale a aussi lieu en fréquence avant le désétalement fréquentiel.

## EXPOSÉ DE L'INVENTION

La présente invention est définie par un émetteur MIMO-FBMC pour émettre une pluralité $U$ de flux de données sur un canal de transmission au moyen d'une pluralité $N^T$ d'antennes d'émission, tel que décrit dans la revendication 1.

L'invention est également définie par un récepteur MIMO-FBMC pour recevoir une pluralité $U$ de flux de données sur un canal de transmission au moyen d'une pluralité $N^R$ d'antennes de réception, tel que décrit dans la revendication 4.

## BRÈVE DESCRIPTION DES DESSINS

D'autres caractéristiques et avantages de l'invention apparaîtront à la lecture de modes de réalisation préférentiels de l'invention faite en référence aux figures jointes parmi lesquelles :

La Fig. 1 représente de manière schématique un système de télécommunication PPN-FBMC connu de l'état de la technique ;
La Fig. 2 représente de manière schématique un système de télécommunication FS-FBMC ;
La Fig. 3A illustre l'étalement spectral réalisé en amont du module IFFT de la Fig. 2 ;
La Fig. 3B illustre le désétalement spectral réalisé en aval du module FFT dans la Fig. 2;
La Fig. 4 illustre la combinaison des symboles FBMC dans la Fig. 2;
La Fig. 5 représente de manière schématique un émetteur de système MIMO-FBMC avec précodage linéaire, selon un premier mode de réalisation de l'invention;
La Fig. 6 représente de manière schématique un récepteur de système MIMO-FBMC avec prédodage linéaire selon un premier mode de réalisation de l'invention ;
Les Figs. 7A et 7B représentent de manière schématique des premier et second exemples de récepteur dans le cas où l'émetteur MIMO-FBMC est celui de la Fig. 5 ;
Les Figs. 8A et 8B représentent de manière schématique des premier et second exemples d'émetteur MIMO-FBMC dans le cas où le récepteur est celui de la Fig. 6 ;
La Fig. 9 représente de manière schématique un émetteur de système MIMO-FBMC avec précodage linéaire et formation de faisceaux à l'émission, selon un second mode de réalisation de l'invention ;
La Fig. 10 représente de manière schématique un récepteur de système MIMO-FBMC avec précodage linéaire et formation de faisceaux à la réception, selon un second mode de réalisation de l'invention.

## EXPOSÉ DÉTAILLÉ DE MODES DE RÉALISATION PARTICULIERS

On considérera dans la suite un système MIMO-FBMC comprenant un émetteur, disposant de $N^T$ antennes, et un ensemble de $Q \geq 1$ récepteurs (ou de manière équivalente d'utilisateurs). Chaque récepteur $q$ dispose d'un nombre

$N_q^R$ d'antennes élémentaires, le nombre total d'antennes de réception étant noté $N^R = \sum_{q=1}^{Q} N_q^R$. L'émetteur transmet une pluralité $U$ de flux, partagés entre les Q récepteurs, $U = \sum_{q=1}^{Q} U_q$ où $U_q$ est le nombre de flux destinés au récepteur $q$.

Une première idée à la base de la présente invention est d'utiliser un système FBMC dans le domaine fréquentiel comme décrit dans le document de M. Bellanger et al. intitulé « FBMC physical layer : a primer » disponible sur le site www.ict-phydyas.org. Les systèmes FBMC implémentés dans le domaine fréquentiel font appel à un étalement spectral d'où leur dénomination de FS-FBMC (Frequency Spread FBMC).

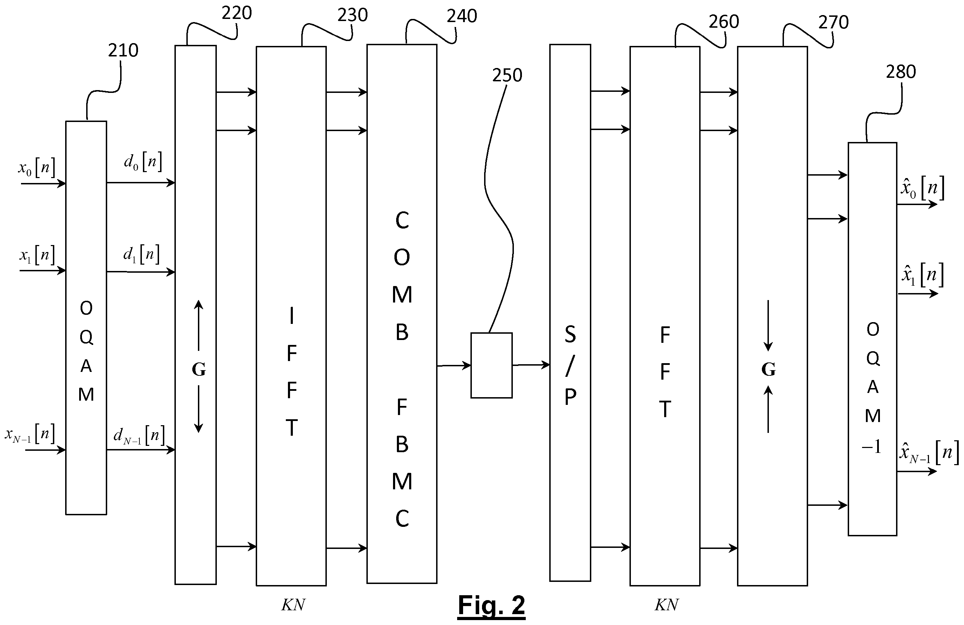

La structure d'un tel système FS-FBMC est représentée en Fig. 2.

Comme dans le système PPN-FBMC, les symboles de modulation QAM à transmettre avec une cadence $Nf$ avec $f = 1/T$ sont regroupés par blocs de taille $N$, $x_0[n],...,x_{N-1}[n]$ où $n$ est l'indice temporel du bloc. Chaque bloc de $N$ symboles est fourni en parallèle à N voies d'entrée d'un module de prétraitement OQAM 210.

Chaque sous-canal est ensuite étalé sur un intervalle de $2K-1$ sous-porteuses adjacentes, centré sur une sous-porteuse centrale du sous-canal. Plus précisément, chaque donnée OQAM est étalée sur $2K-1$ sous-porteuses adjacentes et pondérée par la valeur (réelle) prise par la fonction de transfert du filtre de synthèse à la fréquence correspondante.

On a désigné par 220 le module d'étalement en fréquence et de filtrage par le filtre prototype. Chaque donnée OQAM $d_i[n]$ en entrée du module 220 est étalée sur $2K-1$ sous-porteuses adjacentes pour donner :

$$\breve{d}_{i,k}[n] = d_i[n]G_k \ , \ k = -K+1,...,0,..K-1 \tag{1}$$

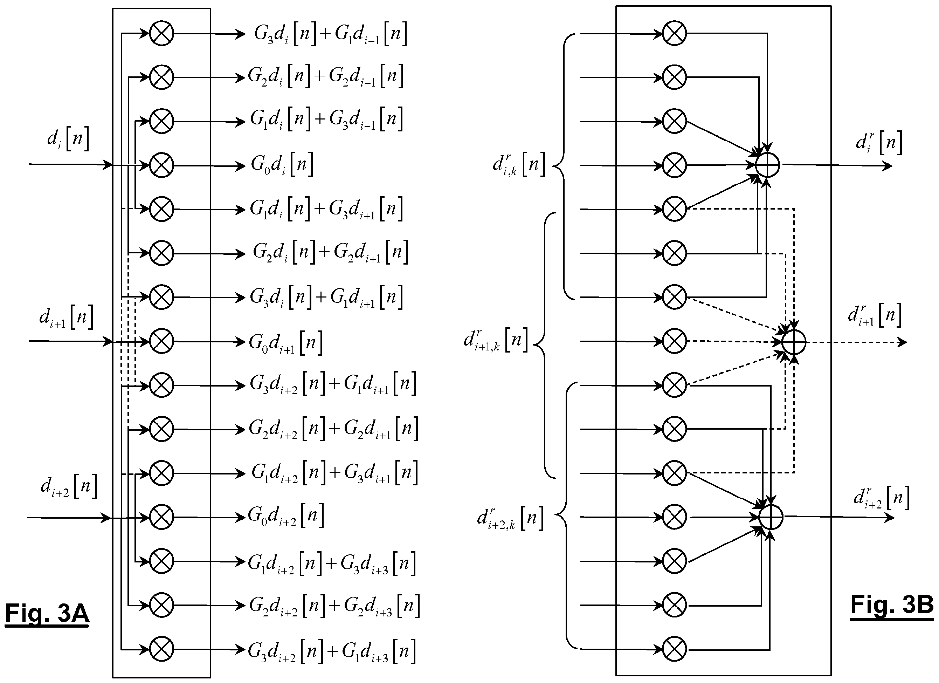

Les données de même parité $i$ et $i+2$ sont séparées spectralement et celles de parités contraires $i$ et $i+1$ se chevauchent comme représenté en Fig. 3A. Ce chevauchement n'engendre toutefois pas d'interférence puisque deux données de parités contraires sont nécessairement respectivement situées sur l'axe réel et l'axe imaginaire et séparées de $T/2$. Par exemple, en Fig. 3A, les données $d_i[n]$ et $d_{i+2}[n]$ sont des valeurs réelles (représentées en traits continus) alors que la donnée $d_{i+1}[n]$ est une valeur imaginaire (représentée par des traits en pointillés). Les valeurs imaginaires sont présentées à l'entrée du module de IFFT avec un décalage de $T/2$ par rapport aux valeurs réelles. L'orthogonalité dans le plan complexe est conservée par le filtrage par le filtre prototype étant donné que les coefficients $G_k$ sont réels.

Les données étalées en fréquence et filtrées font ensuite l'objet d'une IFFT de taille $KN$ en 230.

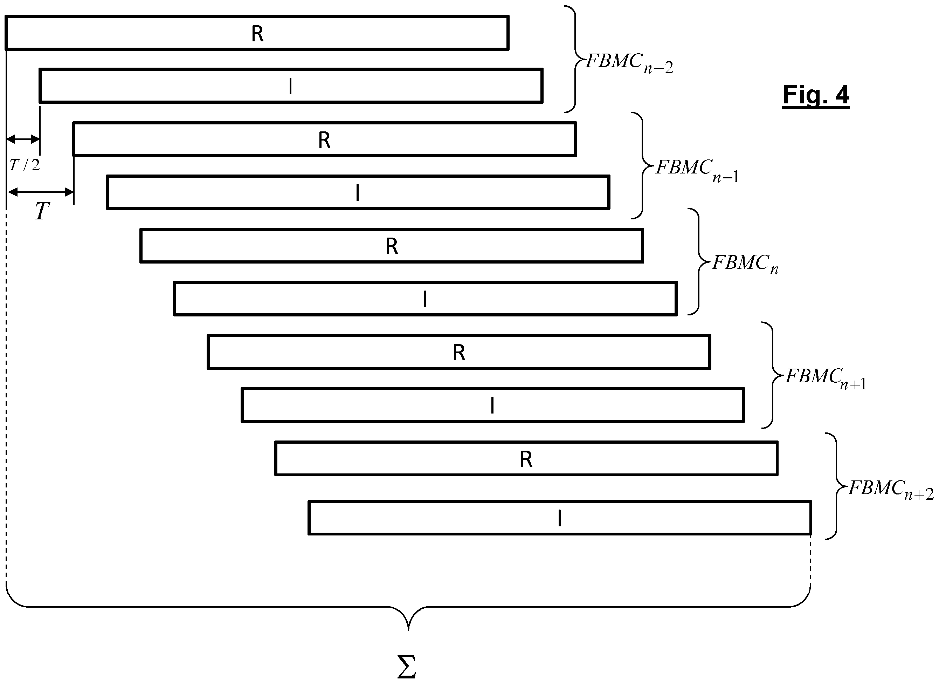

Le bloc d'échantillons temporels en sortie de la IFFT est combiné au moyen du module de combinaison 240 comme indiqué en Fig. 4. L'ensemble des échantillons en sortie de l'IFFT représente un symbole FBMC dans le domaine temporel, deux symboles FBMC successifs étant décalés de $T/2$ (autrement dit de $N/2$ échantillons) et les symboles FBMC ayant chacun une durée $KT$ (autrement dit une taille de $KN$ échantillons). Un symbole FBMC est combiné dans le module 240 avec les $K-1$ symboles FBMC précédents et $K-1$ symboles FBMC suivants. On notera qu'un échantillon en sortie du module de combinaison 240 est la somme de $2K$-1 échantillons de symboles FBMC consécutifs.

Le signal ainsi obtenu est ensuite translaté en bande RF.

Après transmission sur le canal 250, le signal reçu, démodulé en bande de base, est échantillonné par le récepteur à la cadence $Nf$ puis converti en blocs de taille $KN$ par le convertisseur série-parallèle 260.

Une FFT glissante (la fenêtre de la FFT glissant de $N/2$ échantillons entre deux calculs de FFT) de taille $KN$ est effectuée dans le module FFT, 270, sur des blocs de $KN$ échantillons consécutifs en sortie du convertisseur série-parallèle 260.

Les sorties de la FFT sont ensuite soumises à un filtrage et un désétalement spectral dans le module 280. L'opération de désétalement a lieu dans le domaine fréquentiel comme représenté en Fig. 3B. Plus précisément, les échantillons $\breve{d}_{i,k}^{r}[n]$, $k = -K + 1,...,0,...K-1$ correspondant aux $2K$-1 fréquences $(i-1)K+1,....iK,... (i+1)K-1$ de la FFT sont multipliés par les valeurs de la fonction de transfert du filtre d'analyse (translatée en fréquence de celle du filtre prototype) aux fréquences en question et les résultats obtenus sont sommés, soit :

$$d_i^r[n] = \sum_{k=-K+1}^{K-1} G_k \breve{d}_{i,k}^r[n] \qquad (2)$$

où les valeurs $G_k$, $k = -K+1,..., K-1$ sont les valeurs de la fonction de transfert du filtre prototype aux fréquences des sous-porteuses considérées.

On notera que, comme en Fig. 3A, l'obtention de données ayant des rangs de même parité, par exemple $d_i^r[n]$ et $d_{i+2}^r[n]$, fait appel à des blocs d'échantillons disjoints alors que ceux de deux rangs consécutifs, de parités inverses, se chevauchent. Ainsi, l'obtention de la donnée $d_{i+1}^r[n]$ fait appel aux échantillons $\breve{d}_{i,k}^r[n]$, $k = 1,..,K-1$ ainsi qu'aux échantillons $\breve{d}_{i+2,k}^r[n]$, $k = -K+1,...,1$.

Le désétalement de données réelles est représenté par des traits continus alors que celui des données imaginaires est représenté par des traits en pointillés.

Les données $d_i^r[n]$ ainsi obtenues sont ensuite fournies à un module de post-traitement 280, effectuant le traitement inverse de celui du module 210, autrement dit une démodulation OQAM. Les symboles QAM sont ainsi restaurés.

Une seconde idée à la base de la présente invention est d'effectuer le précodage dans le domaine fréquentiel, après l'étalement spectral et avant la IFFT, à un stade où les $KN$ sous-porteuses ne sont pas entrelacées.

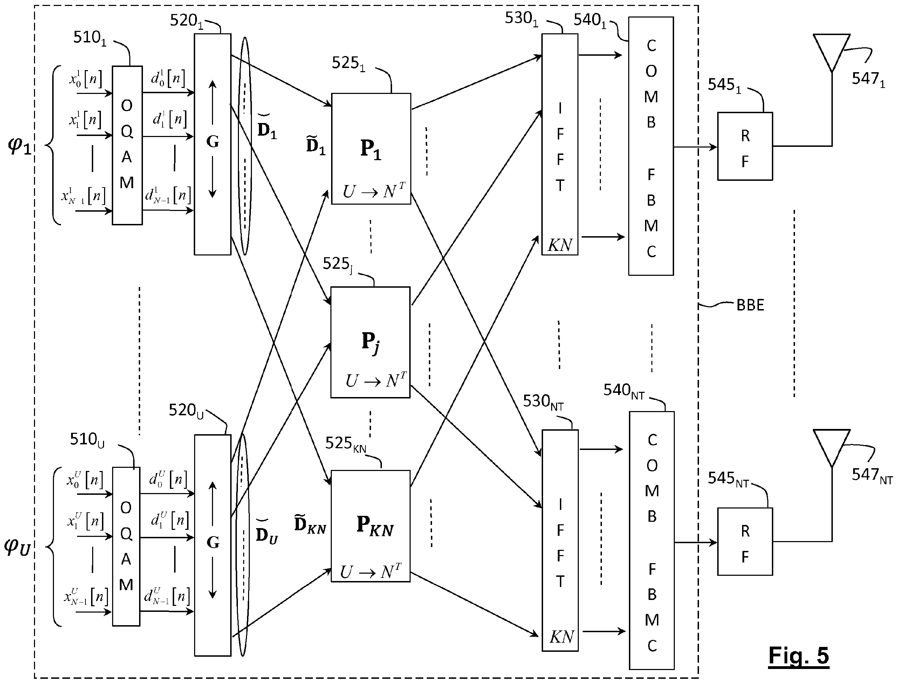

La Fig. 5 représente de manière schématique un émetteur de système MIMO-FBMC avec précodage linéaire, selon un premier mode de réalisation de l'invention.

L'émetteur reçoit en entrée $U$ flux de données à destination des Q utilisateurs, chaque flux, $\varphi_u$, $u = 1,...,U$ se présentant comme une séquence de blocs de taille $N$, $x_0^u[n],...,x_{N-1}^u[n]$. Chaque flux $\varphi_u$ est modulé par un modulateur OQAM, $510_u$, $u = 1,...,U$, identique au module de traitement 210. Chaque élément du vecteur de données $d_i^u[n]$, $i = 1,...,N$ en sortie du modulateur $510_u$ est étalé sur $2K$-1 sous-porteuses adjacentes dans le module d'étalement spectral et de filtrage par le filtre prototype, $520_u$, identique au module 220, décrit précédemment. Les données étalées en fréquence et filtrées, $\breve{d}_{i,k}^u[n] = d_i^u[n]G_k$, se présentent sous forme d'un vecteur $\breve{\mathbf{D}}_u[n]$ de $KN$ échantillons cor-

respondant aux *KN* sous-porteuses.

Les *KN* précodeurs linéaires 525$_1$,...,525$_{KN}$ correspondent respectivement aux *KN* sous-porteuses. Ainsi le précodeur 525$_j$ reçoit les éléments d'indice j (portés par la sous-porteuse *j* ) des vecteurs $\mathbf{\breve{D}}_u[n]$ , u = 1,...,*U* . L'opération effectuée par le précodeur 525$_j$ consiste à multiplier le vecteur d'entrée, $\tilde{D}_j[n]$ de taille *U* constitué par les éléments $\breve{D}_u(j)[n]$ , u = 1,...,*U* , correspondant à la sous-porteuse *j* , par une matrice P$_j$ de taille $N^T \times U$ définie plus loin, la même matrice P$_j$ est appliquée pour tous les vecteurs $\mathbf{\breve{D}}_j^u$ (et donc à toutes les données $d_i^u[n]$ ) d'une même trame. On obtient ainsi en sortie *KN* vecteurs précodés, P$_j\tilde{D}_j[n]$ de taille $N^T$ . Les éléments des vecteurs précodés sont ensuite fournis à une batterie de modules de IFFT, 530$_l$, *l* = 1,..., $N^T$ , chaque module de IFFT étant associé à une antenne de l'émetteur. Le module de IFFT, 530$_l$, reçoit un vecteur constitué des éléments d'indice *l* des *KN* vecteurs précodés et effectue une IFFT de taille *KN* sur ce vecteur.

Les blocs d'échantillons temporels successifs en sortie de ces modules de IFFT sont ensuite soumis à une opération de combinaison dans les modules de combinaison 540$_l$, *l* = 1,...,$N^T$ , chaque module 540$_l$ étant identique au module 240 décrit précédemment.

Les signaux en sortie des modules de combinaison sont ensuite respectivement translatés en bande RF en 545$_l$, *l* = 1,..., $N^T$ , puis amplifiés avant d'être transmis par les $N^T$ antennes de l'émetteur, 547$_l$, *l* = 1,...,$N^T$ .

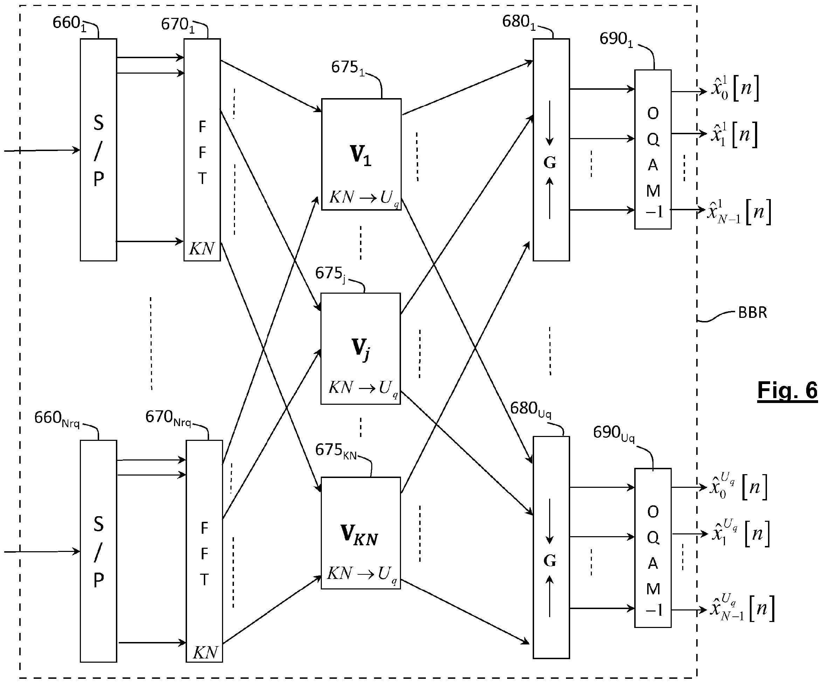

La Fig. 6 représente de manière schématique un récepteur de système MIMO-FBMC avec précodage linéaire, selon un premier mode de réalisation de l'invention.

Le récepteur est équipé ici de $N_q^R$ antennes, les signaux reçus par les différentes antennes étant translatés en bande de base et échantillonnés à la fréquence *Nf* . Pour chaque antenne, les échantillons sont convertis en blocs de taille *KN* . Ainsi, les convertisseurs série-parallèle 660$_p$, $p = 1,...,N_q^r$ , forment des blocs de *KN* échantillons et les fournissent aux modules de FFT, 670$_p$, $p = 1,...,N_q^r$ . Ces modules de FFT effectuent une FFT glissante de taille *KN,* avec un glissement de *N*/ *2,* échantillons entre deux calculs successifs, comme décrit en relation avec le module 270.

Les échantillons fréquentiels en sortie des modules de FFT sont ensuite transmis à *KN* précodeurs linéaires, 675$_j$, *j* = 1,...,*KN* , correspondant chacun à une sous-porteuse. Ainsi, le module de précodage 675$_j$ reçoit les $N_q^r$ éléments d'indice *j* (sous-porteuse *j*) des vecteurs d'échantillons fréquentiels en sortie des modules de FFT et multiplie ce vecteur de taille $N_q^r$ par une matrice de précodage **V**$_q$ de taille $U_q \times N_q^r$ . Les *KN* vecteurs en sortie des précodeurs linéaires, 675$_j$, *j* = 1,...,*KN* , de taille $U_q$ sont ensuite transmis aux $U_q$ modules de filtrage et de désétalement spectral 680$_u$, *u* = 1,...,$U_q$ , opérant chacun comme le module 280 décrit précédemment. Plus précisément, chaque module 680$_u$, correspondant à un flux, reçoit les *KN* échantillons d'indice *u* des vecteurs de sortie des modules 675$_j$, *j* = 1, ...,*KN* . Les $U_q$ vecteurs filtrés et spectralement désétalés, en sortie de ces modules, sont ensuite respectivement fournis à $U_q$ modules de démodulation OQAM, 690$_u$, *u* = 1,...,$U_q$ , pour fournir les données des différents flux de l'utilisateur.

On notera que les précodeurs linéaires 525$_j$ et 675$_j$ sont au nombre de *KN* , chaque précodeur linéaire étant associé à une sous-porteuse. Toutefois, l'homme du métier comprendra que si le canal est du type flat fading (à évanouissement uniforme) ou block fading (à évanouissement par bloc), on pourra réduire le nombre de précodeurs linéaires et multiplexer le précodage dans le temps en amont de l'IFFT du côté émetteur et en aval de la FFT du côté récepteur.

De manière générale, le précodage peut être implémenté à l'émetteur (première variante) ou au récepteur (seconde variante) voire à l'émetteur et au récepteur. Différents exemples de réalisation peuvent aussi être envisagés selon la distribution des flux entre les utilisateurs.

On suppose tout d'abord, selon une première variante, que le précodage est seulement implémenté du côté de l'émetteur. L'architecture de l'émetteur est alors celle de la Fig. 5.

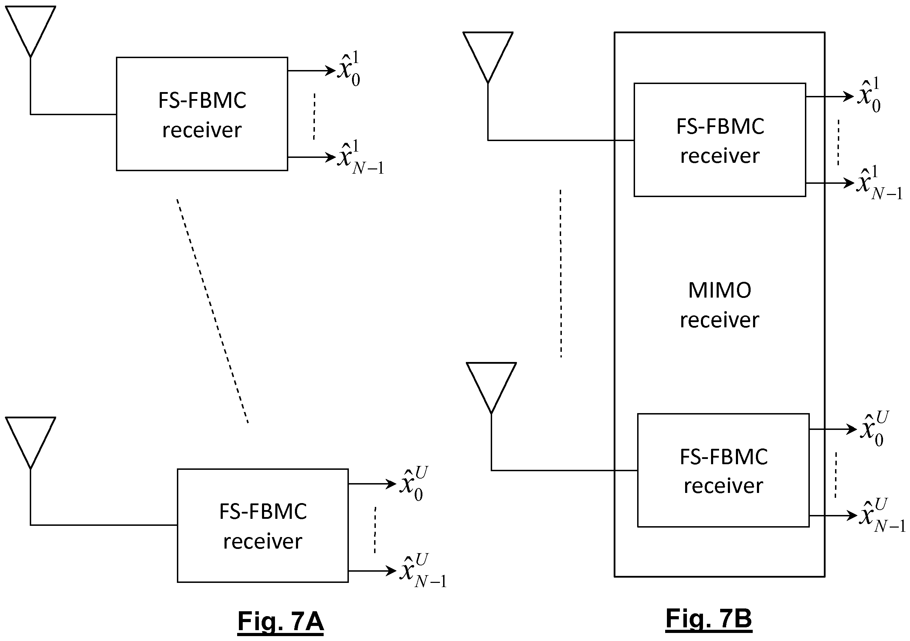

Dans un premier exemple, $U = Q$ , $N^T = U$ , $U_q = 1$ , $N_q^R = 1$ , $q = 1,...,Q$ , autrement dit l'émetteur transmet un flux par utilisateur (exemple de mode dit MU-MIMO ou Multi User MIMO), aucune séparation de flux n'intervenant au niveau des récepteurs (autrement dit les matrices **V**$_q$ , $q$ = 1,...,*Q* se réduisent à la valeur scalaire 1). Les récepteurs selon cet exemple ont été représentés en Fig. 7A : chaque utilisateur est alors équipé d'un récepteur FS-FBMC comme celui décrit en relation avec la partie droite de la Fig. 2.

Dans un second exemple, Q=1, $N^T$ =U, $N^R$ =U, autrement dit l'émetteur transmet la totalité des flux à un seul utilisateur possédant $U$ antennes (exemple de mode dit SU-MIMO ou Single User MIMO). L'utilisateur dispose de $U$ récepteurs FS-FBMC élémentaires indépendants (identiques à celui décrit en relation avec la partie droite de la Fig. 2), chaque récepteur FS-FBMC élémentaire étant associé à une antenne de l'utilisateur, comme illustré en Fig. 7B.

Selon une seconde variante, le précodage est entièrement implémenté du côté du récepteur, autrement dit la séparation des flux est réalisée au niveau du récepteur. L'architecture du récepteur est alors celle de la Fig. 6.

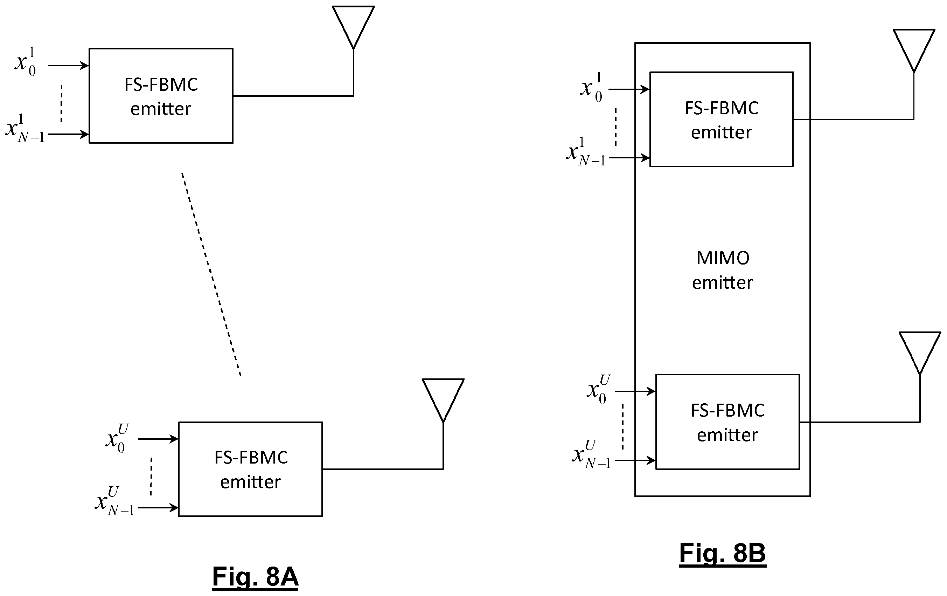

Dans un premier exemple, $N^T$ =1, $U_q$ = 1, $N^R$ = U, autrement dit le système MIMO-FBMC est composé de $U$ émetteurs FS-FBMC disposant chacun d'une antenne, comme représenté en Fig. 8A, et d'un récepteur comportant $U$ antennes. Les émetteurs ont alors la structure d'un émetteur FS-FBMC, telle que décrite en relation avec la partie gauche de la Fig. 2.

Dans un second exemple, Q=1, $N^T$ =U, $N^R$ =U, autrement dit le système MIMO-FBMC est composé d'un émetteur possédant $U$ antennes et d'un récepteur possédant également $U$ antennes. L'émetteur comprend $U$ émetteurs FS-FBMC élémentaires indépendants, chaque émetteur élémentaire étant associé à une antenne, comme illustré en Fig. 8B.

Sans perte de généralité, l'intérêt de réaliser le précodage en aval de la modulation OQAM et de l'étalement spectral, et en amont de la IFFT sera illustré dans le cas de la première variante.

Le signal reçu sur la porteuse $j$ sur les $U$ antennes (appartenant à des utilisateurs différents dans le premier exemple et à des utilisateurs distincts dans le second exemple) peut s'exprimer sous la forme d'un vecteur-colonne $\mathbf{r}_j[n]$ de taille $U$ :

$$\mathbf{r}_j[n] = \mathbf{H}_j\left(\mathbf{P}_j\mathbf{D}_j[n] + \sum_{n_k=n-(2K-1)}^{n+(2K-1)}\mathbf{P}_j\mathbf{D}_j[n_k]\right) + \mathbf{N}_j[n]$$

$$= \mathbf{H}_j\mathbf{P}_j\left(\mathbf{D}_j[n] + \sum_{n_k=n-(2K-1)}^{n+(2K-1)}\mathbf{D}_j[n_k]\right) + \mathbf{N}_j[n] \tag{3}$$

où la somme est effectuée sur l'ensemble des symboles interférents, en fonction de la réponse du filtre prototype, $\mathbf{N}_j$ est un vecteur de bruit additif et $\mathbf{H}_j$ est la matrice de canal de taille $U \times U$ relative à la sous-porteuse $j$.

On pourra par exemple choisir comme matrice de précodage $\mathbf{P}_j = \mathbf{H}_j^{-1}$ (précodage selon un critère ZF), et ainsi :

$$\mathbf{r}_j[n] = \mathbf{D}_j[n] + \sum_{n_k=n-(2K-1)}^{n+(2K-1)}\mathbf{D}_j[n_k] \tag{4}$$

en négligeant ici le terme de bruit. On voit que le précodage n'introduit pas d'interférence supplémentaire par rapport à un système FBMC classique (sans précodage) et que les termes d'interférence sont donc éliminés simplement par la démodulation OQAM, en raison de l'orthogonalité de l'interférence et des données dans le plan complexe.

A l'émission, le fait de réaliser un précodage avant la IFFT et la combinaison dans le domaine temporel permet de ne pas introduire d'interférence supplémentaire par rapport à un système FBMC classique. De manière similaire, le fait de réaliser un précodage après la FFT et donc dans le domaine fréquentiel permet de ne pas introduire d'interférence supplémentaire.

Le précodage linéaire en bande de base, à l'émission et/ou à la réception, peut être combiné avec une formation de faisceaux en bande RF. On rappelle que le précodage a pour objet de créer des canaux virtuels. Le nombre maximal de canaux virtuels est égal au rang de la matrice de canal composite, ici matrice bloc de taille $N \times N^T \times N^R$ où $N$ est le nombre de porteuses, $N^T$ est le nombre d'antennes d'émission et $N^R$ est le nombre d'antennes de réception du système. Ces canaux virtuels peuvent être séparés spatialement en les dirigeant dans des directions appropriées. Par exemple, si l'on suppose que l'émetteur MIMO-FBMC est situé au niveau d'une station de base et que les récepteurs MIMO-FBMC sont situés dans des terminaux MIMO-FBMC, les flux à destination d'un terminal donné pourront être dirigés vers ce terminal en formant un faisceau à l'émission. Réciproquement, on pourra former des faisceaux à la réception en direction des terminaux dont on souhaite recevoir les flux. On évite ainsi d'envoyer ou de recevoir des flux à/en provenance de terminaux non concernés par ces derniers, ce qui permet de réduire l'interférence entre flux.

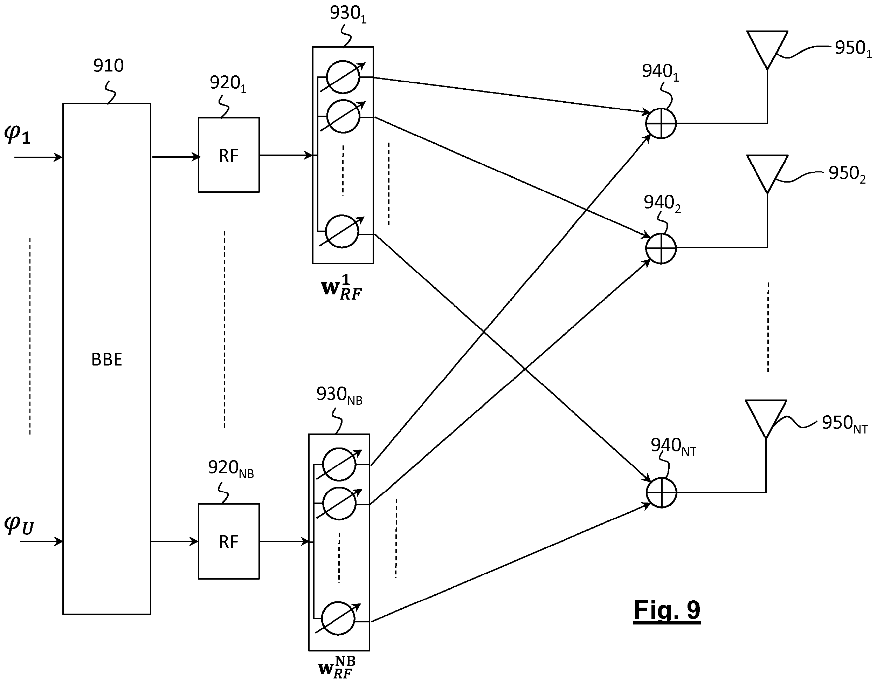

La Fig. 9 représente de manière schématique un émetteur de système MIMO-FBMC avec précodage linéaire et formation de faisceaux à l'émission, selon un exemple non revendiqué.

On a supposé comme en Fig. 5 que l'émetteur MIMO-FBMC devait transmettre $U$ flux $\varphi_1,...,\varphi_U$. Les différents flux sont traités en bande de base par le module 910, identique à l'ensemble désigné par RRE dans la Fig. 5, à la différence près que les matrices de précodage $P_j$, $j = 1,...,KN$ sont de taille $N^B \times U$ au lieu d'être de taille $N^T \times U$ où $N^B$ est le nombre de faisceaux. Les signaux en bande de base, issus des modules de combinaison FBMC et destinés aux différents faisceaux, sont respectivement translatés en bande RF par les modules RF $920_1,...,920_{N^B}$. Les signaux RF ainsi obtenus sont respectivement multipliés en $930_b$, $b = 1,..., N^B$ par $N^B$ vecteurs de déphasage, de taille $N^T$, $\mathbf{W}_{RF}^b$, $b = 1,..., N^B$. Les éléments du vecteur de déphasage $\mathbf{W}_{RF}^b$ introduisent des déphasages sur le signal RF fourni par le module $920_b$ de sorte qu'il est émis dans la direction du faisceau $b$. Le cas échéant, ces éléments introduisent également une pondération du signal RF sur les différentes antennes de manière à réduire les lobes secondaires du faisceau généré.

Les signaux des différents faisceaux issus des multiplicateurs $930_b$, $b = 1,...,N^B$ sont sommés en $940_1,...,940_{N^T}$ pour former $N^T$ signaux d'antennes qui sont respectivement transmis par les antennes $950_1,...,950_{N^T}$.

Dans le cas où le nombre $N^B$ de faisceaux est choisi égal au nombre $U$ de flux, les matrices de précodage sont de taille $U \times U$. La matrice de précodage $P_j$ relative à la sous-porteuse j peut être calculée comme $(H_j W_{RF})^{-1}$ où $W_{RF}$ est la matrice de taille $N^T \times N^B$ résultant de la concaténation des vecteurs $\mathbf{W}_{RF}^b$, $b = 1,..., N^B$.

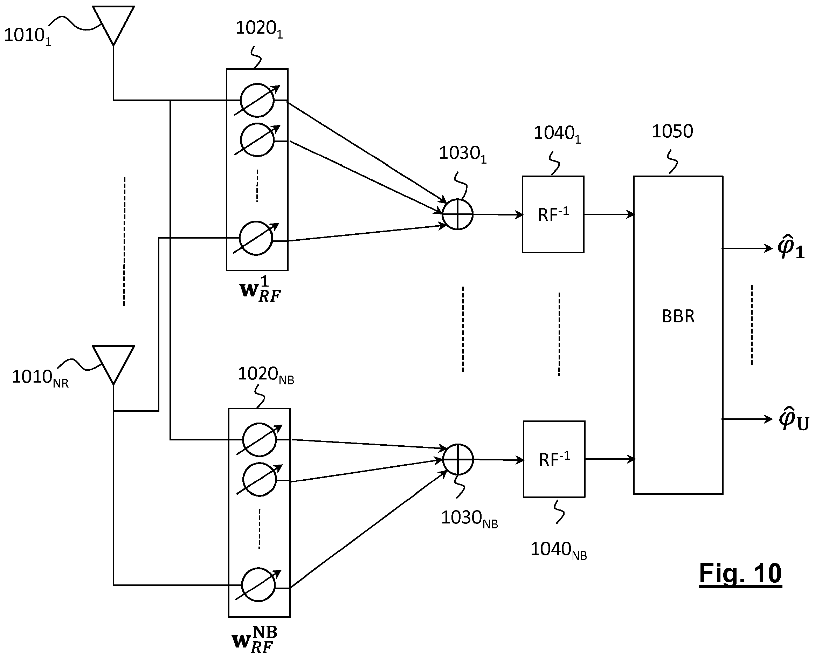

La Fig. 10 représente de manière schématique un émetteur de système MIMO-FBMC avec précodage linéaire et formation de faisceaux à la réception, selon un exemple non revendiqué.

On a supposé ici que le récepteur MIMO-FBMC disposait de $N^R$ antennes de réception, $1010_1,...,1010_{N^R}$, et était destiné à recevoir $U$ flux de données. Les signaux d'antennes sont multipliés par des vecteurs de déphasage $\mathbf{W}_{RF}^b$, $b = 1,...,N^B$ en $1020_1,...,1020_{N^B}$. Les éléments du vecteur de déphasage $\mathbf{W}_{RF}^b$ introduisent des déphasages sur les signaux d'antennes de manière à former un faisceau $b$ en réception. Les éléments de $\mathbf{W}_{RF}^b$ peuvent également pondérer les différents signaux d'antennes de manière à réduire les lobes secondaires du faisceau formé en réception.

Les signaux ainsi multipliés sont ensuite sommés en $1030_1,...,1030_{N^B}$ pour générer $N^B$ signaux de faisceaux en réception. Ces signaux de faisceaux sont ensuite traités par le module de traitement en bande de base 1050, identique au module BBR de la Fig. 6, à la différence près que les matrices de précodage $V_j$, $j = 1,...,KN$, sont ici de taille $N^B \times U$. Le module de traitement en bande de base 1050, et plus précisément les démodulateurs OQAM qu'il contient, fournissent alors les flux de données estimées, $\hat{\varphi}_1,...,\hat{\varphi}_U$.

L'homme du métier comprendra que le second mode de réalisation permet de réduire davantage l'interférence entre les flux (MSI) en les séparant spatialement. Quel que soit le mode de réalisation, la présente invention permet d'obtenir des débits importants tout en conservant les avantages intrinsèques de la modulation FBMC, à savoir une bonne réjection hors bande et une bonne efficacité spectrale.

## Revendications

**1.** Emetteur MIMO-FBMC pour émettre une pluralité $U$ de flux de données sur un canal de transmission au moyen d'une pluralité $N^T$ d'antennes d'émission, **caractérisé en ce qu'**il comprend :

- une pluralité $U$ de modulateurs OQAM ($510_1,...,510_u$) associés aux $U$ flux de données, chaque modulateur recevant un vecteur de données d'un flux et fournissant un vecteur de $N$ composantes alternativement réelles et imaginaires pour $N$ sous-canaux;
- une pluralité $U$ de modules de filtrage et d'étalement spectral ($520_1,...,520_u$) associés aux $U$ modulateurs, chaque module de filtrage et d'étalement spectral étalant chaque composante sur $2K$-1 sous-porteuses adjacentes et les filtrant par la fonction de transfert du filtre prototype, où $K$ est le facteur de recouvrement, pour fournir $KN$ composantes étalées et filtrées;
- une pluralité $KN$ de précodeurs linéaires ($525_1,...,520_{KN}$), respectivement associés aux $KN$ sous-porteuses, chaque précodeur linéaire multipliant les composantes étalées et filtrées relatives à une sous-porteuse ($j$) par une matrice de précodage ($P_j$) pour fournir une pluralité $KN$ de vecteurs précodés ;

- une pluralité ( $N^T$ , $N^B$ ) de modules IFFT ($530_1$,...,$530_{NT}$) recevant chacun des éléments de même indice des vecteurs précodés, chaque module IFFT fournissant un signal temporel représentant un symbole FBMC ;
- une pluralité ( $N^T$ , $N^B$ ) de modules de combinaison de symboles FBMC dans le domaine temporel ($540_1$,...,$540_{NT}$), respectivement associés aux modules IFFT pour fournir des signaux temporels combinés ;
- une pluralité ( $N^T$ , $N^B$ ) de modules de translation de fréquence en bande RF pour générer, à partir desdits signaux temporels combinés, une pluralité $N^T$ de signaux d'antennes destinés à être transmis par lesdites antennes d'émission ;

ladite pluralité de modules IFFT, ladite pluralité de modules de combinaison de symboles FBMC et ladite pluralité de modules de translation en bande RF étant toutes égales à une pluralité $N^B$ de faisceaux, les signaux temporels combinés, translatés en bande RF par lesdits module de translation en bande RF ($920_1$,...,$920_{NB}$) étant chacun multiplié par un vecteur de déphasage ($920_1$,...,$920_{NB}$), les signaux d'antennes étant générés en sommant ($940_1$,...,$940_{NT}$) les composantes des vecteurs ainsi obtenus.

**2.** Emetteur MIMO-FBMC selon la revendication 1, **caractérisé en ce que** les matrices de précodage sont de taille $N^B \times U$.

**3.** Emetteur MIMO-FBMC selon la revendication 2, **caractérisé en ce que** le nombre $N^B$ de faisceaux est choisi égal au nombre $U$ de flux de données et que les matrices de précodage associées aux différentes sous-porteuses sont respectivement égales à l'inverse du produit d'une matrice ($\mathbf{W}_{RF}$), résultant de concaténation des vecteurs de déphasage, par la matrice du canal de transmission pour les différentes sous-porteuses.

**4.** Récepteur MIMO-FBMC pour recevoir une pluralité $U$ de flux de données sur un canal de transmission au moyen d'une pluralité $N^R$ d'antennes de réception, **caractérisé en ce qu'**il comprend :

- une pluralité ($N^R$ , $N^B$) de modules de translation en bande de base pour translater en bande de base une pluralité de signaux de réception générés à partir des signaux d'antennes ;
- une pluralité ($N^R$ , $N^B$) de modules FFT ($670_1$,...,$670_{NR}$), de taille $KN$ où $N$ est le nombre de sous-canaux FBMC et $K$ est le facteur de recouvrement, pour transformer des blocs de $KN$ échantillons des signaux de réception translatés en bande de base, en vecteurs de $KN$ composantes fréquentielles ;
- une pluralité $KN$ de précodeurs linéaires ($675_1$,...,$675_{KN}$), respectivement associés aux $KN$ sous-porteuses, chaque précodeur linéaire multipliant un vecteur de composantes fréquentielles à la sous-porteuse qui lui est associée par une matrice de précodage ( $\mathbf{V}_j$ ) pour fournir une pluralité $KN$ de vecteurs précodés de taille $U$ ;
- une pluralité $U$ de modules de filtrage et désétalement fréquentiel ($680_1$,...,$680_u$), chaque module filtrant et désétalant les composantes fréquentielles des vecteurs précodés associées à une sous-porteuse pour fournir une pluralité $U$ de vecteurs de composantes filtrées et désétalées ;
- une pluralité $U$ de modules de démodulation OQAM ($680_1$,...,$680_u$) pour démoduler respectivement les $U$ vecteurs de composantes filtrées et désétalées et fournir $U$ flux de données estimées ;

ladite pluralité de modules de translation en bande de base et ladite pluralité de modules FFT étant égales à un nombre prédéterminé $N^B$ de faisceaux, les signaux de réception étant obtenus en multipliant ($1020_1$,...,$1020_{NB}$) l'ensemble des signaux d'antennes par $N^B$ vecteurs de déphasage de taille $N^R$ pour obtenir $N^B$ vecteurs de signaux déphasés, les composantes de chaque vecteur de signaux déphasés étant ensuite sommées ($1030_1$,...,$1030_{NB}$) pour fournir un signal de réception.

**5.** Récepteur MIMO-FBMC selon la revendication 4, **caractérisé en ce que** les matrices de précodage sont de taille $N^B \times U$.

**6.** Récepteur MIMO-FBMC selon la revendication 5, **caractérisé en ce que** le nombre $N^B$ de faisceaux est choisi égal au nombre $U$ de flux de données et que les matrices de précodage associées aux différentes sous-porteuses sont respectivement égales à l'inverse du produit d'une matrice ($\mathbf{W}_{RF}$), résultant de concaténation des vecteurs de déphasage, par la matrice du canal de transmission pour les différentes sous-porteuses.

**Patentansprüche**

**1.** MIMO-FBMC-Sender zum Senden einer Vielzahl $U$ von Datenströmen auf einem Übertragungskanal mittels einer Vielzahl $N^T$ von Sendeantennen, **dadurch gekennzeichnet, dass** er Folgendes aufweist: :

- eine Vielzahl $U$ von OQAM-Modulatoren ($510_1$, ..., $510_u$), die den $U$ Datenströmen zugeordnet sind, wobei jeder Modulator einen Datenvektor eines Stroms empfängt und einen Vektor von $N$ abwechselnd reellen und imaginären Komponenten für $N$ Unterkanäle bereitstellt;

- eine Vielzahl $U$ von spektralen Filter- und Spreizmodulen ($520_1$,...,$520_u$), die den $U$ Modulatoren zugeordnet sind, wobei jedes spektrale Filter- und Spreizmodul jede Komponente auf $2K-1$ benachbarte Unterträger spreizt und sie durch die Übertragungsfunktion des Prototypfilters filtert, wobei $K$ der Überlappungsfaktor ist, um $KN$ gespreizte und gefilterte Komponenten bereitzustellen;

- eine Vielzahl $KN$ von linearen Vorkodierern ($525_1$, ..., $520_{KN}$), die jeweils den $KN$ Unterträgern zugeordnet sind, wobei jeder lineare Vorkodierer die gespreizten und gefilterten Komponenten, die sich auf einen Unterträger ($j$) beziehen, mit einer Vorkodierungsmatrix ($\mathbf{P}_j$) multipliziert, um eine Vielzahl $KN$ von vorkodierten Vektoren bereitzustellen;

- eine Vielzahl $N^T, N^B$ von IFFT-Modulen ($530_1$,...,$530_{NT}$), die jeweils Elemente mit demselben Index der vorkodierten Vektoren empfangen, wobei jedes IFFT-Modul ein Zeitsignal liefert, das ein FBMC-Symbol darstellt;

- eine Vielzahl $N^T, N^B$ von Symbolkombinationsmodulen FBMC im Zeitbereich ($540_1$, ..., $540_{NT}$), die jeweils den IFFT-Modulen zugeordnet sind, um kombinierte Zeitsignale zu liefern ;

- eine Vielzahl $N^T, N^B$ von HF-Band-Frequenzumsetzungsmodulen, um aus den kombinierten Zeitsignalen eine Vielzahl $N^T$ von Antennensignalen zu erzeugen, die von den Sendeantennen gesendet werden sollen ;

wobei die mehreren IFFT-Module, die mehreren FBMC-Symbolkombinationsmodule und die mehreren HF-Band-Translationsmodule alle gleich einer Vielzahl $N^B$ von Strahlen sind, wobei die kombinierten Zeitsignale, die durch die HF-Band-Translationsmodule ($920_1$,...,$920_{NB}$) in das HF-Band translatiert wurden, jeweils mit einem Phasenverschiebungsvektor ($920_1$,...,$920_{NB}$) multipliziert werden, indem die Komponenten der so erhaltenen Vektoren summiert werden ($940_1$, ..., $940_{NT}$).

2. MIMO-FBMC-Sender nach Anspruch 1, **dadurch gekennzeichnet, dass** die Vorcodierungsmatrizen die Größe $N^B \times U$ haben.

3. MIMO-FBMC-Sender nach Anspruch 2, **dadurch gekennzeichnet, dass** die Anzahl $N^B$ der Strahlen gleich der Anzahl $U$ der Datenströme gewählt wird und dass die den verschiedenen Unterträgern zugeordneten Vorcodierungsmatrizen jeweils gleich dem Kehrwert des Produkts einer Matrix $\mathbf{W}_{RF}$ sind, die sich aus der Verkettung der Phasenverschiebungsvektoren ergibt, mit der Matrix des Übertragungskanals für die verschiedenen Unterträger.

4. MIMO-FBMC-Empfänger zum Empfangen einer Vielzahl $U$ von Datenströmen auf einem Übertragungskanal mittels einer Vielzahl $N^R$ von Empfangsantennen, **dadurch gekennzeichnet, dass** er aufweist:

- eine Vielzahl ($N^R, N^B$) von Basisband-Übersetzungsmodulen zum Übersetzen einer Vielzahl von aus den Antennensignalen erzeugten Empfangssignalen in das Basisband ;

- eine Vielzahl ($N^R, N^B$) von FFT-Modulen ($670_1$, ..., $670_{NR}$) der Größe $KN$, wobei $N$ die Anzahl der FBMC-Unterkanäle und $K$ der Überlappungsfaktor ist, zum Transformieren von Blöcken von $KN$ Abtastwerten der basisbandtranslatierten Empfangssignale in Vektoren von $KN$ Frequenzkomponenten ;

- eine Vielzahl $KN$ von linearen Vorkodierern ($675_1$, ..., $675_{KN}$), die jeweils den $KN$ Unterträgern zugeordnet sind, wobei jeder lineare Vorkodierer einen Vektor von Frequenzkomponente an dem ihm zugeordneten Unterträger mit einer Vorkodierungsmatrix ($\mathbf{V}_j$) multipliziert, um eine Vielzahl $KN$ von vorkodierten Vektoren der Größe $U$ bereitzustellen;

- eine Vielzahl $U$ von Frequenzfilter- und Entspreizungsmodulen ($680_1$, ..., $680_u$), wobei jedes Modul die Frequenzkomponenten der vorcodierten Vektoren, die einem Unterträger zugeordnet sind, filtert und entspreizt, um eine Vielzahl $U$ von Vektoren gefilterter und entspreizter Komponenten bereitzustellen;

- eine Vielzahl $U$ von OQAM-Demodulationsmodulen ($680_1$,...,$680_u$) zum jeweiligen Demodulieren der $U$ gefilterten und entspreizten Komponentenvektoren und zum Bereitstellen von $U$ geschätzten Datenströmen ;

wobei die mehreren Basisband-Translationsmodule und die mehreren FFT-Module gleich einer vorbestimmten Anzahl $N^B$ von Strahlen sind, wobei die Empfangssignale durch Multiplikation ($1020_1$,...,$1020_{NB}$) aller Antennensignale mit $N^B$ Phasenverschiebungsvektoren der Größe $N^R$ erhalten werden, um $N^B$ phasenverschobene Signalvektoren zu erhalten, wobei die Komponenten jedes phasenverschobenen Signalvektors anschließend summiert werden ($1030_1$,...,$1030_{NB}$), um ein Empfangssignal zu liefern.

5. MIMO-FBMC-Empfänger nach Anspruch 4, **dadurch gekennzeichnet, dass** die Vorcodierungsmatrizen die Größe $N^B \times U$ haben.

6. MIMO-FBMC-Empfänger nach Anspruch 5, **dadurch gekennzeichnet, dass** die Anzahl $N^B$ der Strahlen gleich der Anzahl $U$ der Datenströme gewählt wird und dass die den verschiedenen Unterträgern zugeordneten Vorcodierungsmatrizen jeweils gleich dem Kehrwert des Produkts einer Matrix ($\mathbf{W}_{RF}$) sind, die sich aus der Verkettung der Phasenverschiebungsvektoren ergibt, mit der Matrix des Übertragungskanals für die verschiedenen Unterträger sind.

**Claims**

1. MIMO-FBMC transmitter for transmitting a plurality $U$ of data streams on a transmission channel using a plurality $N^T$ of transmission antennas **characterised in that** it comprises:

   - a plurality $U$ of OQAM modulators ($510_1,...,510_U$) associated with the $U$ data streams, each modulator receiving a stream data vector and supplying a vector of $N$ alternating real and imaginary components for N sub-channels;
   - a plurality $U$ of filtering and spectral spreading modules ($520_1,...,520_U$) associated with the $U$ modulators, each filtering and spectral spreading module spreading each component over $2K$-1 adjacent sub-carriers and filtering them using the prototype filter transfer function, where $K$ is the overlap factor, in order to supply $KN$ spread and filtered components;
   - a plurality $KN$ of linear precoders, ($525_1,...,520_{KN}$), associated respectively with the $KN$ sub-carriers, each linear precoder multiplying the spread and filtered components relating to a sub-carrier ($j$) by a precoding matrix ($\mathbf{P}_j$) in order to supply a plurality $KN$ of precoded vectors;
   - a plurality ( $N^T, N^B$ ) of IFFT modules ($530_1,...,530_{NT}$) each receiving elements with the same index as the precoded vectors, where each IFFT module supplies a time signal which represents an FBMC symbol;
   - a plurality ( $N^T, N^B$ ) of FBMC symbol combination modules in the time domain ($540_1,...,540_{NT}$), associated respectively with the IFFT modules in order to supply combined time signals;
   - a plurality ( $N^T, N^B$ ) of modules for translation of frequency to RF band to generate, from said combined time signals, a plurality $N^T$ of antenna signals destined to be transmitted by said transmission antennas;

   said plurality of IFFT modules, said plurality of FBMC symbol combination modules and said plurality of translation to RF band modules being all equal to the plurality $N^B$ of beams, said combined time signals translated to RF band by said modules for translation to RF band ($920_1,...,920_{NB}$) each being multiplied by a phase-shift vector ($920_1,...,920_{NB}$), the antenna signals being generated by summing ($940_1,...,940_{NT}$) the components of the vectors thus obtained.

2. MIMO-FBMC transmitter according to claim 1, **characterised in that** the precoding matrices are of size $N^T \times U$.

3. MIMO-FBMC transmitter according to claim 2, **characterised in that** the number $N^B$ of beams is chosen to be equal to the number $U$ of data streams, and the precoding matrices associated with the various sub-carriers are respectively equal to the inverse of the product of a matrix ($\mathbf{W}_{RF}$) resulting from concatenation of the phase-shift vectors, with the matrix of the transmission channel for the various sub-carriers.

4. MIMO-FBMC receiver for receiving a plurality $U$ of data streams on a transmission channel using a plurality $N^R$ of reception antennas **characterised in that** it comprises:

   - a plurality ( $N^R, N^B$ ) of base-band translation modules for translating, to base band, a plurality of reception signals generated from antenna signals;
   - a plurality ($N^R, N^B$) of FFT modules ($670_1,...,670_{NR}$) of size $KN$ where $N$ is the number of FBMC sub-channels and K is the overlap factor, for transforming blocks of $KN$ samples of the reception signals translated to a base band, into vectors of $KN$ frequency components;
   - a plurality $KN$ of linear precoders ($675_1,...,675_{KN}$), respectively associated with $KN$ sub-carriers, each linear precoder multiplying a vector of frequency components at the sub-carrier which is associated with it by a precoding matrix ($\mathbf{V}_j$) to supply a plurality $KN$ of precoded vectors of size $U$ ;
   - a plurality $U$ of filtering and frequency despreading modules ($680_1,...,680_U$), where each module filters and despreads the frequency components of the precoded vectors associated with a sub-carrier to provide a plurality $U$ of filtered and despread component vectors;
   - a plurality $U$ of OQAM demodulation modules ($680_1,...,680_U$) in order to demodulate, respectively, the $U$ filtered and despread component vectors and to provide $U$ estimated data flows;
   - said plurality of translation to base-band modules and said plurality of FFT modules being both equal to a predetermined number $N^B$ of beams, the reception signals being obtained by multiplying ($1020_1$,...,$1020_{NB}$) all of the antenna signals by $N^B$ phase-shift vectors of size $N^R$ to obtain $N^B$ vectors of phase-shift signals, the components of each vector of phase-shift signals then being summed ($1030_1$,...,$1030_{NB}$) to provide a reception signal

5. MIMO-FBMC receiver according to claim 4, **characterised in that** the precoding matrices are of size $N^B \times U$ .

6. MIMO-FBMC receiver according to claim 5, **characterised in that** the number $N^B$ of beams is chosen to be equal to the number $U$ of data streams, and that the precoding matrices associated with the various sub-carriers are respectively equal to the inverse of the product of a matrix ($\mathbf{W}_{RF}$) resulting from concatenation of the phase-shift vectors, with the matrix of the transmission channel for the various sub-carriers.

Fig. 1

**Fig. 2**

$G_3 d_i[n] + G_1 d_{i-1}[n]$

$G_2 d_i[n] + G_2 d_{i-1}[n]$

$G_1 d_i[n] + G_3 d_{i-1}[n]$

$G_0 d_i[n]$

$G_1 d_i[n] + G_3 d_{i+1}[n]$

$G_2 d_i[n] + G_2 d_{i+1}[n]$

$G_3 d_i[n] + G_1 d_{i+1}[n]$

$G_0 d_{i+1}[n]$

$G_3 d_{i+2}[n] + G_1 d_{i+1}[n]$

$G_2 d_{i+2}[n] + G_2 d_{i+1}[n]$

$G_1 d_{i+2}[n] + G_3 d_{i+1}[n]$

$G_0 d_{i+2}[n]$

$G_1 d_{i+2}[n] + G_3 d_{i+3}[n]$

$G_2 d_{i+2}[n] + G_2 d_{i+3}[n]$

$G_3 d_{i+2}[n] + G_1 d_{i+3}[n]$

$d_i[n]$

$d_{i+1}[n]$

$d_{i+2}[n]$

**Fig. 3A**

$d_i^r[n]$

$d_{i+1}^r[n]$

$d_{i+2}^r[n]$

$d_{i,k}^r[n]$

$d_{i+1,k}^r[n]$

$d_{i+2,k}^r[n]$

**Fig. 3B**

**Fig. 4**

**Fig. 5**

Fig. 6

EP 3 244 547 B1

18

**Fig. 7B**

**Fig. 7A**

$x_0^1$ →

$x_{N-1}^1$ →

FS-FBMC emitter

$x_0^U$ →

$x_{N-1}^U$ →

FS-FBMC emitter

**Fig. 8A**

$x_0^1$ →

$x_{N-1}^1$ →

FS-FBMC emitter

MIMO emitter

$x_0^U$ →

$x_{N-1}^U$ →

FS-FBMC emitter

**Fig. 8B**

Fig. 9

**Fig. 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B. HIROSAKI.** An orthogonally multiplexed QAM system using the discrete Fourier transform. *IEEE Trans on Comm.,* Juillet 1981, vol. 29 (7), 982-989
- **P. SIOHAN et al.** Analysis and design of OFDM/OQAM systems based on filterbank theory. *IEEE Trans. on signal processing,* Mai 2002, vol. 50 (5), 1170-1183
- **E. AUGER.** Time domain precoding for MIMO-OFDM systems. *Proc. of 10th International OFDM Workshop,* Août 2005
- **F. HORLIN et al.** Interference-free SDMA for FB-MC-OQAM. *EURASIP Journal on Advances in Signal Processing,* 2013, vol. 46, 1-13
- Optimal zero forcing precoder and decoder design for multi-user MIMO FBMC under strong channel selectivity. **ROTTENBERG FRANCOIS et al.** 2016 IEEE INTERNATIONAL CONFERENCE ON ACOUSTICS, SPEECH AND SIGNAL PROCESSING (ICASSP). IEEE, 20 Mars 2016
- **AMIR AMINJAVAHERI et al.** Frequency spreading equalization in multicarrier massive MIMO. *2015 IEEE INTERNATIONAL CONFERENCE ON COMMUNICATION WORKSHOP (ICCW),* 05 Avril 2015
- **M. BELLANGER et al.** *FBMC physical layer : a primer, www.ict-phydyas.org*